# EUROPEAN PATENT APPLICATION

(11) **EP 4 618 572 A1**
(43) Date of publication of application: **17.09.2025**
(21) Application number: 23888671.7
(22) Date of filing: 06.11.2023
(51) Int. Cl.: H04N 23/55, G02B 17/08, G03B 15/00, G03B 17/17, G03B 35/08, G03B 35/18, G03B 37/00, H04N 23/695

(54) **OPTICAL DEVICE AND IMAGING DEVICE**

(30) Priority: 11.11.2022 JP 2022181179
(71) Applicant: Kyocera Corporation, Kyoto-shi, Kyoto 612-8501 (JP)
(72) Inventor: SUGAHARA Shun, Kyoto-shi, Kyoto 612-8501 (JP)
(74) Representative: Viering, Jentschura & Partner mbB Patent- und Rechtsanwälte
(86) International application number: PCT/JP2023/039950
(87) International publication number: WO 2024/101324

(57) **Abstract**

An optical device includes a first optical element and a second optical element. The first optical element forms an image of light coming from a subject as a first image onto an area including a first imaging region of an imaging element and wider than the first imaging region. The second optical element forms an image of light coming from the subject as a second image onto an area including a second imaging region of an imaging element and wider than the second imaging region.

## Description

### CROSS-REFERENCE TO RELATED APPLICATIONS

The present application claims priority to Japanese Patent Application No. 2022-181179, filed November 11, 2022, the entire disclosure of which is incorporated herein by reference.

### TECHNICAL FIELD

The present disclosure relates to an optical device and an imaging device.

### BACKGROUND OF INVENTION

A known system enables capturing both images for distance calculation and images for display by using a single imaging device (see, for example, Patent Literature 1).

### CITATION LIST

### PATENT LITERATURE

Patent Literature 1: Japanese Unexamined Patent Application Publication No. 2004-289305

### SUMMARY

In an embodiment of the present disclosure, an optical device includes a first optical element and a second optical element. The first optical element forms an image of light coming from a subject as a first image onto an area including a first imaging region of an imaging element and wider than the first imaging region. The second optical element forms an image of light coming from the subject as a second image onto an area including a second imaging region of an imaging element and wider than the second imaging region.

In an embodiment of the present disclosure, an optical device includes a first optical element, a second optical element, a fifth optical element, and a sixth optical element. The first optical element forms an image of light coming from a subject as a first image onto an area including a first imaging region of an imaging element and wider than the first imaging region The second optical element forms an image of light coming from the subject as a second image onto an area including a second imaging region of an imaging element and wider than the second imaging region. The fifth optical element causes light traveling from the first optical element toward the second imaging region to travel toward inside the first imaging region. The sixth optical element causes light traveling from the second optical element toward the first imaging region to travel toward inside the second imaging region.

In an embodiment of the present disclosure, an imaging device includes an imaging element, a first optical system, and a second optical system. The imaging element has an imaging region including a first imaging region and a second imaging region that is adjacent to the first imaging region. The first optical system includes a first optical element that forms an image of light coming from a subject as a first image onto an area wider than the first imaging region. The second optical system includes a first optical element that forms an image of light coming from the subject as a second image onto an area wider than the second imaging region.

### BRIEF DESCRIPTION OF THE DRAWINGS

FIG. 1 is a side view illustrating a schematic configuration example of an imaging device according to an embodiment.
FIG. 2 is a diagram illustrating an example of an image captured by the imaging device illustrated in FIG. 1.
FIG. 3 is a flowchart illustrating exemplary steps of a distance measurement process based on a reconstructed image generated from a superimposed image.
FIG. 4 is a diagram illustrating the imaging device when viewed from a direction perpendicular to an optical axis in order to illustrate a variation of an optical element illustrated in FIG. 1.
FIG. 5 is a diagram illustrating the imaging device when viewed from the direction perpendicular to the optical axis in order to illustrate another variation of the optical element illustrated in FIG. 1.
FIG. 6 is a diagram illustrating the imaging device when viewed from the direction perpendicular to the optical axis in order to illustrate a still another variation of the optical element illustrated in FIG. 1.
FIG. 7 is a diagram illustrating the imaging device when viewed from the direction perpendicular to the optical axis in order to illustrate a yet another variation of the optical element illustrated in FIG. 1.
FIG. 8 is a diagram illustrating the imaging device when viewed from the direction perpendicular to the optical axis in order to illustrate a further variation of the optical element illustrated in FIG. 1.
FIG. 9 is a diagram illustrating the imaging device when viewed from a normal direction of a light-receiving region in order to illustrate a further variation of the optical element illustrated in FIG. 1.
FIG. 10 is a diagram illustrating the imaging device when viewed from the normal direction of the light-receiving region in order to illustrate a further variation of the optical element illustrated in FIG. 1.
FIG. 11 is a diagram illustrating the imaging device when viewed from the normal direction of the light-receiving region in order to illustrate a further variation of the optical element illustrated in FIG. 1.
FIG. 12 is a diagram illustrating the imaging device when viewed from the normal direction of the light-receiving region in order to illustrate a further variation of the optical element illustrated in FIG. 1.
FIG. 13 is a diagram illustrating the imaging device when viewed from the normal direction of the light-receiving region in order to illustrate a further variation of the optical element illustrated in FIG. 1.
FIG. 14 is a diagram illustrating the imaging device when viewed from the normal direction of the light-receiving region in order to illustrate a further variation of the optical element illustrated in FIG. 1.
FIG. 15 is a diagram illustrating the imaging device when viewed from the normal direction of the light-receiving region in order to illustrate a further variation of the optical element illustrated in FIG. 1.
FIG. 16 is a side view illustrating a schematic configuration example of an imaging device according to another embodiment.
FIG. 17 is a diagram illustrating an example of an image captured by the imaging device illustrated in FIG. 16.
FIG. 18 is a diagram illustrating the imaging device when viewed from the normal direction of the light-receiving region in order to illustrate a further variation of the optical element illustrated in FIG. 1.

### DESCRIPTION OF EMBODIMENTS

When a single imaging element has regions created therein such that two images for distance measurement are each captured in a corresponding one of the regions, the number of pixels of the image captured in each of the regions is reduced. Capturing a wide-angle image in each of the regions also becomes challenging. As a result, accuracy of distance calculation based on the captured images is reduced. When an imaging device includes two imaging elements in order to achieve an increase in the number of pixels of captured images and to enable capturing a wide-angle image, the imaging device increases in size. According to an embodiment of the present disclosure, an optical device and an imaging device achieve improvement in accuracy of distance calculation and a reduction in a size of a device.

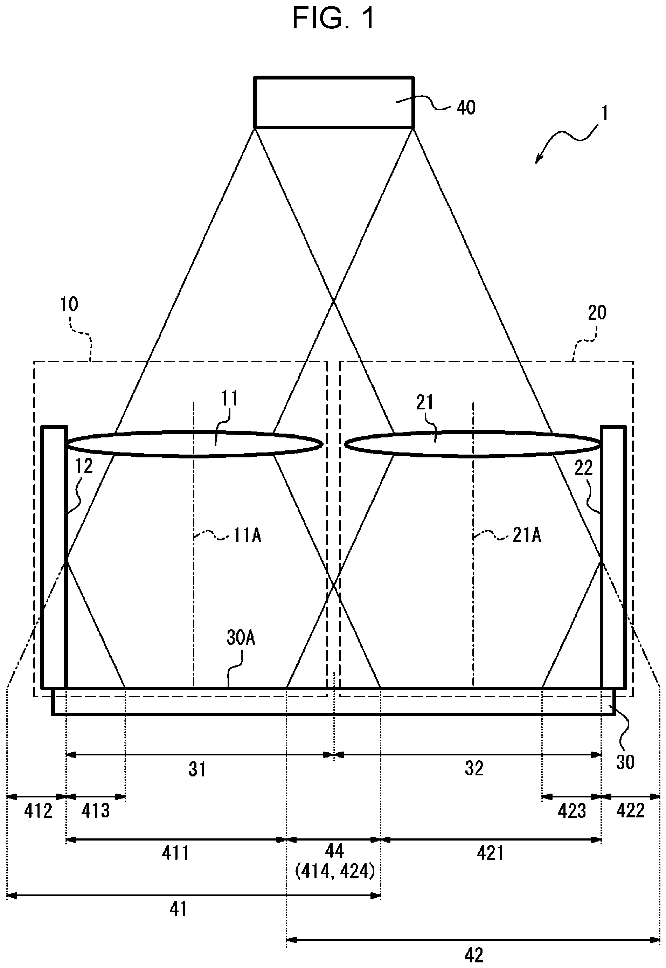

A distance measurement device calculates a distance to each point of a distance measurement target on the basis of a disparity image of the distance measurement target and generates distance data of the distance measurement target. According to an embodiment of the present disclosure, an imaging device 1 (see FIG. 1) captures a disparity image of a subject 40 (see FIG. 1) that is a distance measurement target and outputs the disparity image to the distance measurement device.

In distance measurement based on a disparity image, resolution and accuracy of distance data are improved as a baseline length increases. The baseline length corresponds to a distance between devices that capture two images constituting a disparity image.

As a method for capturing a disparity image to generate distance measurement data, for example, a method using a stereo camera may be considered. A stereo camera is a technique for performing triangulation using two cameras arranged in parallel. In the stereo camera, a distance between the two cameras corresponds to a baseline length. Accordingly, resolution and accuracy of distance data may be improved by increasing the baseline length of the stereo camera. A focal length of each of the two cameras can be set, and this enables capturing a wide-angle image. However, when the baseline length of the stereo camera is increased, a device increases in size as the two cameras are arranged in such a manner as to be spaced apart from each other. Calibration of the two cameras is also required.

As a method for capturing a disparity image to generate distance measurement data, for example, a pupil division method may be considered. The pupil division method is a technique for forming a stereo camera within a lens by dividing a pupil of a camera. A device that employs the pupil division method can be smaller in size than a stereo camera because it can be configured with a single pupil. However, a baseline length is limited by a pupil diameter. Consequently, increasing the baseline length is difficult. This makes it difficult to improve resolution and accuracy of distance data. In the pupil division method, a method of increasing a focal length may be considered in order to improve resolution and accuracy of distance data. However, increasing the focal length makes it difficult to capture a wide-angle image. In other words, limitation on a baseline length makes it difficult to capture a wide-angle image or to improve resolution and accuracy of distance data.

As another method for capturing a disparity image to generate distance measurement data, a method for capturing an image by superimposing inputs from two pupils and capturing them with a single imaging element may be considered. A device employing this method can achieve an increased baseline length and can capture a wide-angle image like a stereo camera, and it can be configured with fewer imaging elements compared to a stereo camera. However, in order to superimpose inputs from two pupils, an optical system requires a specialized optical design. In addition, the number of components included in the optical system increases. Consequently, size reduction is costly.

In contrast, according to an embodiment of the present disclosure, the imaging device 1 can be configured simply and compactly while achieving wide-angle image capturing and improved resolution and accuracy of distance data. A specific configuration of the imaging device 1 will be described below.

### (Configuration Example of Imaging Device 1)

As illustrated in FIG. 1, according to an embodiment of the present disclosure, the imaging device 1 includes a first optical system 10, a second optical system 20, and an imaging element 30. The first optical system 10 and the second optical system 20 are also referred to as optical devices. In the imaging device 1, the first optical system 10 and the second optical system 20 each form an image of the subject 40, and the imaging element 30 captures the formed images. As a result, the imaging device 1 can capture, as a disparity image, an image obtained by capturing the image that has been formed by the first optical system 10 and an image obtained by capturing the image that has been formed by the second optical system 20. The image formed by the first optical system 10 is also referred to as a first image 41. The image formed by the second optical system 20 is also referred to as a second image 42. The image obtained by capturing the first image 41 is also referred to as a first image. The image obtained by capturing the second image 42 is also referred to as a second image. The disparity image includes the first image and the second image.

### <Imaging Element 30>

The imaging element 30 includes a light-receiving region 30A. The imaging element 30 captures an image of light incident on the light-receiving region 30A. The light-receiving region 30A is also referred to as an imaging region. The imaging element 30 may be capable of capturing an image formed by visible light or invisible light such as infrared light or ultraviolet light. The imaging element 30 may include, for example, a CCD (charge-coupled device) image sensor or a CMOS (complementary metal oxide semiconductor) image sensor. The imaging element 30 may include a color image sensor. The light-receiving region 30A of the imaging element 30 may include multiple pixels. Each of the pixels may be covered with, for example, an RGB color filter to be uniformly distributed within the light-receiving region 30A. The imaging element 30 generates an image signal on the basis of an electrical signal output by each of the pixels in accordance with the amount of light incident on each of the pixels. The imaging element 30 may generate an image signal at a predetermined frame rate such as 30 fps (frame per second).

The light-receiving region 30A includes a first light-receiving region 31 and a second light-receiving region 32. The first light-receiving region 31 is also referred to as a first imaging region. The second light-receiving region 32 is also referred to as a second imaging region. The first light-receiving region 31 and the second light-receiving region 32 do not overlap each other on the light-receiving region 30A. In addition, the area of the first light-receiving region 31 and the area of the second light-receiving region 32 are the same as each other. The first light-receiving region 31 and the second light-receiving region 32 may be adjacent to each other. The first light-receiving region 31 and the second light-receiving region 32 are distinguished from each other for convenience of description. In the actual light-receiving region 30A, the first light-receiving region 31 and the second light-receiving region 32 does not necessarily be distinguishable from each other.

### <Optical System>

The first optical system 10 includes a first optical element 11. The first optical element 11 includes an optical axis 11A. The first optical element 11 forms an image of light or a light beam coming from the subject 40 onto the light-receiving region 30A of the imaging element 30. The light or the light beam coming from the subject 40 travels between two solid lines connecting the subject 40 and the first optical element 11 to each other. The first optical system 10 does not necessarily include the first optical element 11.

The first optical element 11 may include at least one lens. The first optical element 11 may include various lenses such as a convex lens and a concave lens. The first optical element 11 may include various mirrors such as a convex mirror, a concave mirror, and a plane mirror. The first optical element 11 may include a diaphragm. The first optical element 11 is not limited to including these components and may include various other elements.

The first optical element 11 forms an image of the subject 40 onto the light-receiving region 30A as the first image 41. A portion of the first image 41 is formed onto the first light-receiving region 31. Another portion of the first image 41 is formed onto a portion of the second light-receiving region 32. In other words, the first optical element 11 forms an image of the light or the light beam coming from the subject 40 as the first image 41 onto an area wider than the first light-receiving region 31.

The first optical system 10 is not necessarily image-side telecentric. In other words, the angle of the direction of a chief ray of any light beam passing through the first optical system 10 with respect to the optical axis 11A of the first optical element 11 may be greater than 0 degrees. Alternatively, the first optical system 10 may be image-side telecentric. The first optical system 10 may be configured such that the angle formed by the optical axis 11A of the first optical system 10 and a chief ray of the light beam coming from the subject 40 differs from the angle formed by the optical axis 11A of the first optical system 10 and a chief ray of the light beam to be imaged as the first image 41. The angle formed by the optical axis 11A of the first optical system 10 and the chief ray of the light beam coming from the subject 40 may be greater than the angle formed by the optical axis 11A of the first optical system 10 and the chief ray of the light beam to be imaged as the first image 41.

The second optical system 20 includes a second optical element 21. The second optical element 21 includes an optical axis 21A. The second optical element 21 forms an image of light or a light beam coming from the subject 40 onto the light-receiving region 30A of the imaging element 30. The light or the light beam coming from the subject 40 is located in an area between two solid lines connecting the subject 40 and the second optical element 21 to each other. The light or the light beam that is formed as an image on the light-receiving region 30A is located in an area between two solid lines connecting the second optical element 21 and the light-receiving region 30A to each other. The second optical element 21 may be configured identically or similarly to the first optical element 11. The second optical system 20 does not necessarily include the second optical element 21.

The second optical element 21 forms an image of the subject 40 onto the light-receiving region 30A as the second image 42. A portion of the second image 42 is formed onto the second light-receiving region 32. Another portion of the second image 42 is formed onto a portion of the first light-receiving region 31. In other words, the second optical element 21 forms an image of the light or the light beam coming from the subject 40 as the second image 42 onto an area wider than the second light-receiving region 32.

The second optical system 20 is not necessarily image-side telecentric. In other words, the angle of the direction of a chief ray of any light beam passing through the second optical system 20 with respect to the optical axis 21A of the second optical element 21 may be greater than 0 degrees. Alternatively, the second optical system 20 may be image-side telecentric. The second optical system 20 may be configured such that the angle formed by the optical axis 21A of the second optical system 20 and a chief ray of the light beam coming from the subject 40 differs from the angle formed by the optical axis 21A of the second optical system 20 and a chief ray of the light beam to be imaged as the second image 42. The angle formed by the optical axis 21A of the second optical system 20 and the chief ray of the light beam coming from the subject 40 may be greater than the angle formed by the optical axis 21A of the second optical system 20 and the chief ray of the light beam to be imaged as the second image 42.

### (Operation Example of Imaging Device 1)

An operation example of the imaging device 1 that captures a disparity image will be described below.

### <Imaging of Subject 40>

A portion of the first image 41 may be formed onto the second light-receiving region 32. A portion of the second image 42 may be formed onto the first light-receiving region 31. In other words, a portion of the first image 41 and a portion of the second image 42 may be formed to be superimposed on each other in a region extending across a boundary between the first light-receiving region 31 and the second light-receiving region 32. The portion of the first image 41 superimposed on the second image 42 is referred to as a first superimposed image 414. The portion of the second image 42 superimposed on the first image 41 is referred to as a second superimposed image 424. The first superimposed image 414 and the second superimposed image 424 are collectively referred to as a superimposed image 44. An image of a portion of the first image 41 that is not superimposed on the second image 42 is referred to as a first non-superimposed image 411. An image of a portion of the second image 42 that is not superimposed on the first image 41 is referred to as a second non-superimposed image 421.

Some of light rays that are imaged as the first image 41 may sometimes travel from the first optical element 11 toward the outside of the light-receiving region 30A. The first optical system 10 may further include a third optical element 12. The third optical element 12 reflects the light rays traveling from the first optical element 11 toward the outside of the light-receiving region 30A and causes the light rays to travel inside the light-receiving region 30A. The third optical element 12 may cause at least part of light traveling toward the outside of the first and second light-receiving regions 31 and 32 to travel toward the inside of the first light-receiving region 31. The third optical element 12 is configured as a plane mirror. The light rays reflected by the third optical element 12 are imaged within the first light-receiving region 31. An image that is formed by the light rays reflected by the third optical element 12 corresponds to an image that is included in the first non-superimposed image 411 and obtained by folding back an image formed outside the first light-receiving region 31 into the first light-receiving region 31. The image formed outside the first light-receiving region 31 is referred to as a first external image 412. The image folded back into the first light-receiving region 31 is referred to as a first folded image 413.

Some of light rays that are imaged as the second image 42 may sometimes travel from the second optical element 21 toward the outside of the light-receiving region 30A. The second optical system 20 may further include a fourth optical element 22. The fourth optical element 22 reflects the light rays traveling from the second optical element 21 toward the outside of the light-receiving region 30A and causes the light rays to travel inside the light-receiving region 30A. The fourth optical element 22 may cause at least part of light traveling toward the outside of the first and second light-receiving regions 31 and 32 to travel toward the inside of the second light-receiving region 32. The fourth optical element 22 is configured as a plane mirror. The light rays reflected by the fourth optical element 22 are imaged within the second light-receiving region 32. An image that is formed by the light rays reflected by the fourth optical element 22 corresponds to an image that is included in the second non-superimposed image 421 and obtained by folding back an image formed outside the second light-receiving region 32 into the second light-receiving region 32. The image formed outside the second light-receiving region 32 is referred to as a second external image 422. The image folded back into the second light-receiving region 32 is referred to as a second folded image 423.

The imaging element 30 captures an image formed on the light-receiving region 30A and generates a captured image. The captured image includes images obtained by capturing the first non-superimposed image 411, the second non-superimposed image 421, and the superimposed image 44 (the first superimposed image 414 and the second superimposed image 424).

When the first optical system 10 includes the third optical element 12, the captured image further includes an image obtained by capturing an image in which the first folded image 413 is superimposed on the first non-superimposed image 411. When the second optical system 20 includes the fourth optical element 22, the captured image further includes an image obtained by capturing an image in which the second folded image 423 is superimposed on the second non-superimposed image 421.

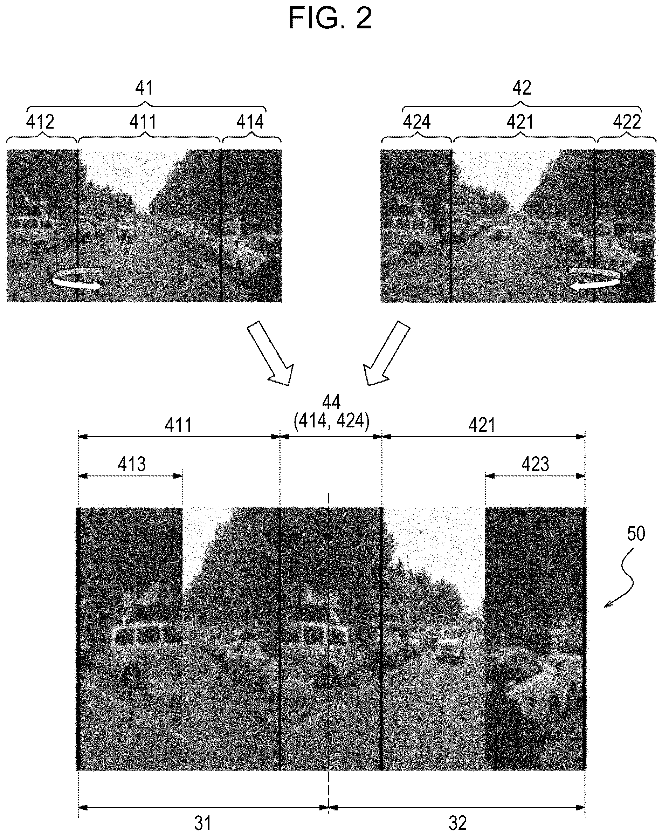

As illustrated in FIG. 2, a captured image can be captured as an image in which the first image 41 and the second image 42 are superimposed on each other. The first image 41 includes the first non-superimposed image 411, the first superimposed image 414, and the first external image 412. The second image 42 includes the second non-superimposed image 421, the second superimposed image 424, and the second external image 422. An image in which the first image 41 and the second image 42 are superimposed on each other at a portion where the superimposed image 44 is formed is referred to as a superimposed image 50.

The superimposed image 50 includes an image obtained by capturing the superimposed image 44 in which the first superimposed image 414 and the second superimposed image 424 are superimposed on each other. The superimposed image 50 includes an image obtained by capturing the first non-superimposed image 411 and an image obtained by capturing an image in which the first folded image 413 is superimposed on a portion of the first non-superimposed image 411. The superimposed image 50 includes an image obtained by capturing the second non-superimposed image 421 and an image obtained by capturing an image in which the second folded image 423 is superimposed on a portion of the second non-superimposed image 421.

A width of the first image 41 appearing in the superimposed image 50 is the sum of a width of the superimposed image 44, a width of the first non-superimposed image 411, and a width of the first folded image 413. The term "width" refers to a length in a direction in which the first image 41 and the second image 42 are arranged, that is, a length in a horizontal direction in FIG. 2. The width of the first image 41 is larger than a width of the first light-receiving region 31. A width of the second image 42 appearing in the superimposed image 50 is the sum of the width of the superimposed image 44, a width of the second non-superimposed image 421, and a width of the second folded image 423. The width of the second image 42 is larger than a width of the second light-receiving region 32. As a result, the sum of the widths of the first image 41 and the second image 42, both appearing in the superimposed image 50, can be larger than a width of the light-receiving region 30A.

In the superimposed image 50 illustrated in FIG. 2, although the third optical element 12 and the fourth optical element 22 are each disposed to fold back an image in the horizontal direction in FIG. 2, the third optical element 12 and the fourth optical element 22 may each be disposed to fold back an image in a vertical direction in FIG. 2. In other words, a height of the first image 41 or the second image 42 appearing in the superimposed image 50 can be larger than a height of the light-receiving region 30A. The term "height" refers to a length in a direction orthogonal to the direction in which the first image 41 and the second image 42 are arranged, that is, a length in the vertical direction in FIG. 2.

The light-receiving region 30A of the imaging element 30 captures images of the light or the light beam coming from the subject 40 formed on the light-receiving region 30A by the first optical system 10 and the second optical system 20. Conversely, an area in which the light or the light beam can be formed as images by the first optical system 10 and the second optical system 20 to be captured on the light-receiving region 30A corresponds to an angle of view of the imaging device 1. An area in which images are directly formed onto the light-receiving region 30A by the first optical element 11 and the second optical element 21 without reflection by the third optical element 12 and the fourth optical element 22 is also referred to as a direct angle of view.

According to the present embodiment, the imaging device 1 can image light or a light beam incident on the first optical system 10 and the second optical system 20 from outside the direct angle of view as a result of the third optical element 12 and the fourth optical element 22 causing the light or the light beam to travel toward the light-receiving region 30A to form an image. As a result, the angle of view can be widened without changing a focal length. Since the focal length does not need to be changed, widening the angle of view has less impact on resolution and accuracy of distance measurement based on a disparity image captured by the imaging device 1.

### <Separation and Reconstruction of Superimposed Image>

An image captured by superimposing a portion of the first image 41 and a portion of the second image 42 can be separated into the first image 41 and the second image 42. An image captured by superimposing the first folded image 413 on the first non-superimposed image 411 can be separated into the first folded image 413 and the first non-superimposed image 411. The first external image 412 converted from the separated first folded image 413 is connected to the first non-superimposed image 411, so that an image including an image of the first non-superimposed image 411, an image of the first superimposed image 414, and an image of the first external image 412 can be obtained as a captured image of the first image 41.

An image captured by superimposing the second folded image 423 on the second non-superimposed image 421 can be separated into the second folded image 423 and the second non-superimposed image 421. The second external image 422 converted from the separated second folded image 423 is connected to the second non-superimposed image 421, so that an image including an image of the second non-superimposed image 421, an image of the second superimposed image 424, and an image of the second external image 422 can be acquired as a captured image of the second image 42.

An image captured by superimposing the first superimposed image 414 and the second superimposed image 424 can be separated into an image obtained by capturing the first superimposed image 414 and an image obtained by capturing the second superimposed image 424 by employing, for example, an image processing method such as an independent component analysis, a wavelet method, or an image separation model. The image separation model is, for example, a model constructed by generating beforehand an image in which multiple images are superimposed, and learning multiple correct images separated from the image, which is created beforehand. The image separation model may be a Pix-to-Pix model that includes, like an Encoder-Decoder model, a generator that generates an image and a discriminator that determines whether a generated image is a fake image and that causes the generator and the discriminator to compete against each other to generate a pair of images that reflect their relationship.

The image captured by superimposing the first folded image 413 and the first non-superimposed image 411 and the image captured by superimposing the second folded image 423 and the second non-superimposed image 421 can be separated by a method the same as or similar to the method of separating the first superimposed image 414 and the second superimposed image 424 from each other.

The separated first superimposed image 414 or first folded image 413 can be reconstructed as the first image by being combined with the first non-superimposed image 411. The separated second superimposed image 424 or second folded image 423 can be reconstructed as the second image by being combined with the second non-superimposed image 421.

A captured superimposed image may include a portion where images are not superimposed. The captured superimposed image may include a portion where two images are superimposed. The captured superimposed image may include a portion in which three or more images are superimposed. Even in an image in which three or more images are superimposed, the images can be separated from each other by, for example, separating them one by one.

The imaging device 1 may further include at least one processor, at least one dedicated circuit, or a combination thereof, for separating images. The processor may include a general-purpose processor, such as a CPU (central processing unit) or a GPU (graphics processing unit), or a dedicated processor for a specific process. The dedicated circuit may include, for example, an FPGA (field-programmable gate array) or an ASIC (application specific integrated circuit). The processor may separate the superimposed image 50 into the first image 41 and the second image 42, each without superimposition, and output them respectively. The imaging device 1 may output separated images to the distance measurement device. The imaging device 1 may reconstruct, using at least one processor, dedicated circuit, or the like, an image by combining the separated images, and output the reconstructed image to the distance measurement device.

The imaging device 1 may output images that have been superimposed and captured to the distance measurement device without separating them. The distance measurement device may separate images that have been superimposed and captured from the images received from the imaging device 1, and combine the separated images for reconstruction.

### <Distance Measurement Based on Reconstructed Image>

As described above, the separation and restoration of the image may be executed by the imaging device 1 or may be executed by the distance measurement device. The distance measurement device calculates, on the basis of the reconstructed image, a distance to each point of the subject 40 appearing in the reconstructed image, and generates distance data of the subject 40.

### <Exemplary Steps of Distance Measurement Process>

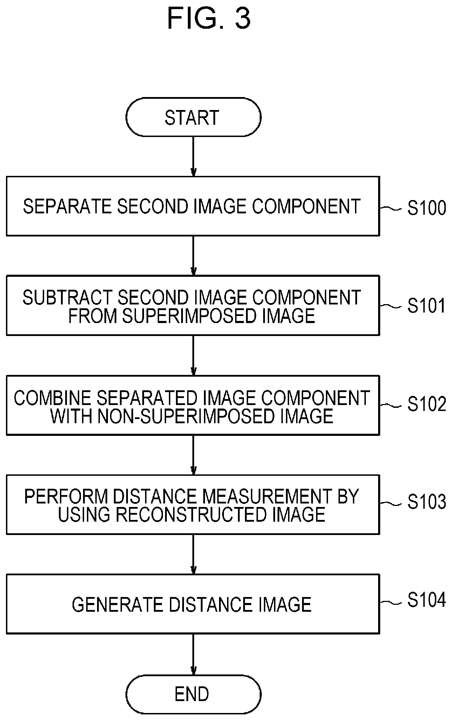

An image separated and reconstructed from the superimposed image 50 is also referred to as a reconstructed image. A distance measurement process based on the reconstructed image generated from the superimposed image 50 will be described below along the exemplary steps illustrated in FIG. 3. In the following exemplary steps, separation and reconstruction of the superimposed image 50 captured by superimposing the first superimposed image 414 and the second superimposed image 424 are executed by the processor of the imaging device 1. The distance measurement process based on the reconstructed image is executed by the distance measurement device. The superimposed image 50 includes a component of the first superimposed image 414 and a component of the second superimposed image 424. The component of the first superimposed image 414 is also referred to as a first image component. The component of the second superimposed image 424 is also referred to as a second image component.

The processor of the imaging device 1 separates the second image component from the superimposed image 50 (step S100). The processor generates the first image component by subtracting the second image component separated in step S100 from the superimposed image 50 (step S101). The processor generates a reconstructed image by combining the second image component separated in step S100 or the first image component generated in step S101 with a non-superimposed image (step S102).

The distance measurement device obtains the reconstructed image generated by the processor of the imaging device 1 in step S102, and uses the reconstructed image to perform distance measurement (calculation of a distance to each point) for each point of the subject 40 appearing in the reconstructed image (step S103). The distance measurement device generates, on the basis of a result of the distance measurement executed in step S103, a distance image in which the distances to all of the points of the subject 40 are mapped to an image of the subject 40 (step S104). After step S104 has been executed, execution of the steps in the flowchart illustrated in FIG. 3 is terminated.

### <Summary>

As described above, according to the present embodiment, the imaging device 1 captures, using the imaging element 30, a superimposed image in which the first image 41 and the second image 42 are partially superimposed, and separates the captured superimposed image. In this manner, the imaging device 1 can capture an image formed onto a region wider than the light-receiving region 30A. The imaging device 1 can superimpose and capture two images creating disparity, and thus, the number of imaging elements 30 can be reduced compared with a stereo camera. The imaging device 1 can capture an image wider than the light-receiving region 30A, and thus, the imaging element 30 itself can be reduced in size. As a result, the imaging device 1 can be smaller in size than a stereo camera. In other words, widening the angle of view can be achieved without increasing the size of the imaging element 30.

According to the present embodiment, the imaging device 1 is configured such that the first optical system 10 directly forms an image of the subject 40 on the first light-receiving region 31 of the imaging element 30 and such that the second optical system 20 directly forms an image of the subject 40 on the second light-receiving region 32. In other words, the imaging device 1 can be small in size because the first optical system 10 and the second optical system 20 do not require individual imaging elements.

According to the present embodiment, in the imaging device 1, the degree of freedom regarding setting the distance between the first optical system 10 and the second optical system 20, that is, the baseline length is higher than that in the case of employing the pupil division method. Since the degree of freedom regarding setting the baseline length is high, it facilitates both wide-angle image capturing and improved resolution and accuracy of distance data.

### (Other Embodiments)

Other embodiments of the imaging device 1 will be described below.

### <Other Forms of Reflective Surface>

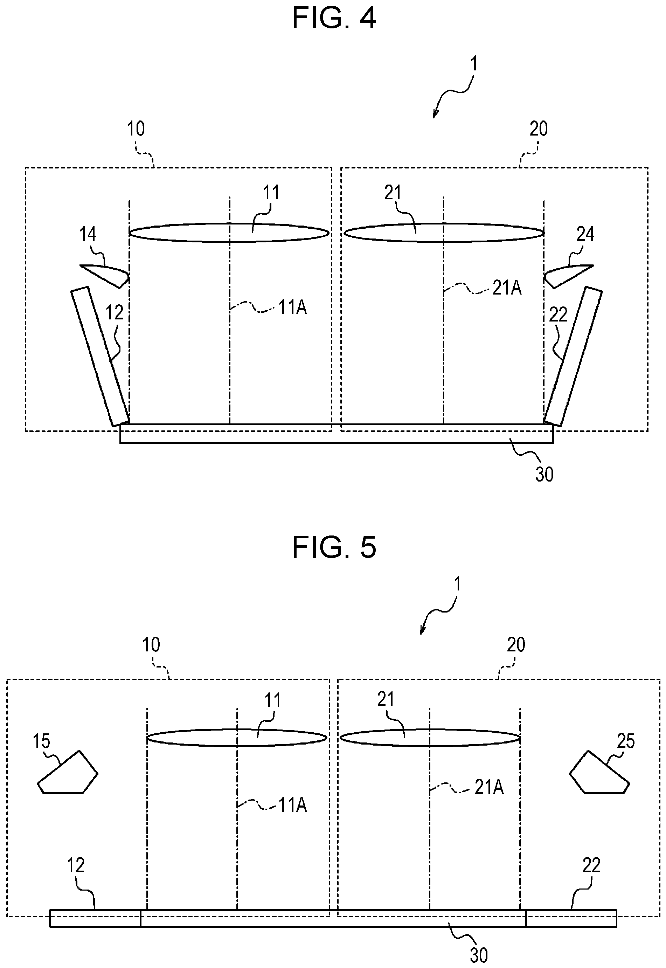

As illustrated in FIG. 4, a reflective surface of a mirror that is the third optical element 12 may be inclined with respect to the optical axis 11A to be inclined outward toward the first optical element 11. A reflective surface of a mirror that is the fourth optical element 22, may be inclined with respect to the optical axis 21A to be inclined outward toward the second optical element 21. Since the reflective surfaces are inclined outward, the angle of views of the entire optical devices can be widened compared to a configuration in which the reflective surfaces of the mirrors are each parallel to the corresponding optical axis 11A or 21A.

In a configuration in which the reflective surfaces are inclined outward, the first optical system 10 may include a seventh optical element 14 that is a lens configured for optical path length adjustment, located between the first optical element 11 and the third optical element 12. The second optical system 20 may include an eighth optical element 24 that is a lens configured for optical path length adjustment, located between the second optical element 21 and the fourth optical element 22. By disposing the seventh optical element 14 or the eighth optical element 24, the magnitude of the deviation of a focal position from the first light-receiving region 31 or the second light-receiving region 32 due to an increase in optical path length can be reduced compared to a configuration in which the reflective surfaces of the mirrors are each parallel to the corresponding optical axis 11A or 21A. The seventh optical element 14 or the eighth optical element 24 may be a cylindrical lens in a configuration in which the mirrors are mirrors having surfaces parallel to a direction orthogonal to the optical axis 11A or 21A, similar to plane mirrors. The seventh optical element 14 or the eighth optical element 24 may be located outside a line representing a chief ray of a light beam passing through an outer edge of an exit pupil of the first optical system 10 or the second optical system 20 when viewed from the optical axis 11A or 21A.

In the configuration in which the reflective surfaces are inclined outward, as illustrated in FIG. 5, the first optical system 10 may include a ninth optical element 15. The second optical system 20 may include a tenth optical element 25. The ninth optical element 15 or the tenth optical element 25 may each include, for example, a prism. The first optical system 10 may be configured such that light traveling from the first optical element 11 to the outside of the first light-receiving region 31 is reflected by the third optical element 12 and further reflected by the ninth optical element 15 to travel into the first light-receiving region 31. The second optical system 20 may be configured such that light traveling from the second optical element 21 to the outside of the second light-receiving region 32 is reflected by the fourth optical element 22 and further reflected by the tenth optical element 25 to travel into the second light-receiving region 32. By providing the ninth optical element 15 or the tenth optical element 25, in the configuration in which the reflective surfaces are inclined outward, an inclination angle between each of the mirrors and the corresponding optical axis 11A or 21A can be widened.

In the configuration in which the reflective surfaces are inclined outward, the third optical element 12 or the fourth optical element 22, which is the mirror, may be, for example, a plane mirror, a curved mirror, a DMD (digital mirror device), or a Fresnel mirror.

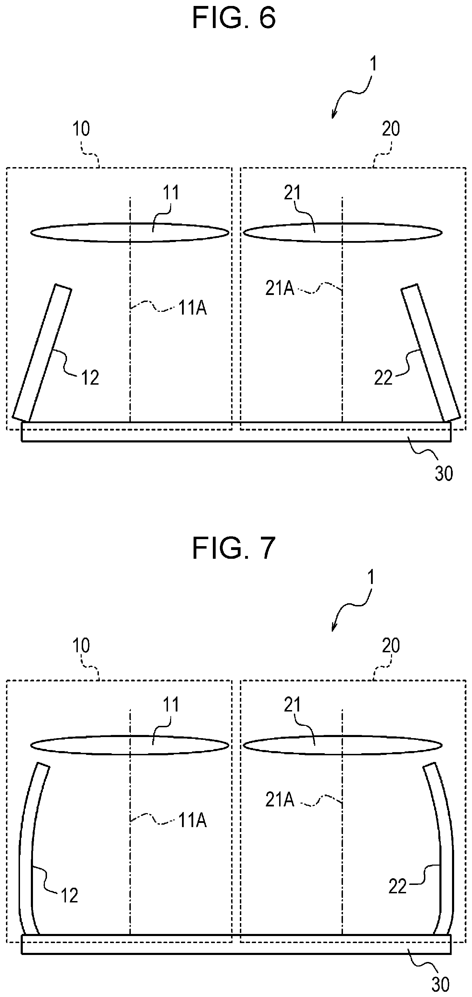

As illustrated in FIG. 6, the reflective surface of the mirror that is the third optical element 12 may be inclined with respect to the optical axis 11A to be inclined inward toward an image plane of the first optical element 11. The reflective surface of the mirror that is the fourth optical element 22 may be inclined with respect to the optical axis 21A to be inclined inward toward an image plane of the second optical element 21. Since the reflective surfaces are inclined inward, the entire optical devices can be reduced in size compared to the configuration in which the reflective surfaces of the mirrors are each parallel to the corresponding optical axis 11A or 21A.

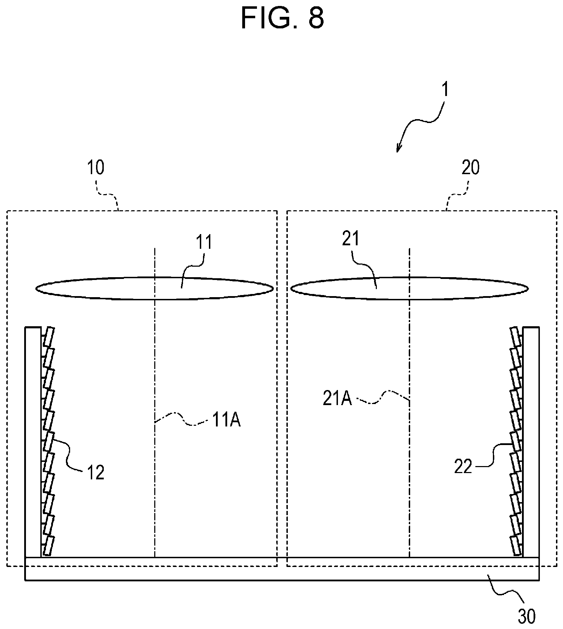

In a configuration in which the reflective surfaces are inclined inward, the third optical element 12 or the fourth optical element 22, which is the mirror, may include, for example, a plane mirror, a curved mirror illustrated in FIG. 7, a DMD illustrated in FIG. 8, or a Fresnel mirror.

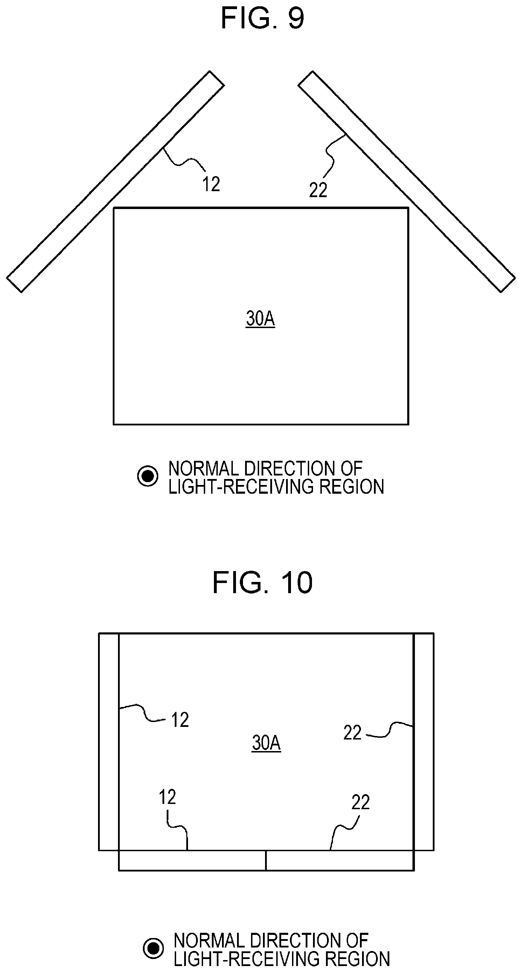

The reflective surface of the mirror that is the third optical element 12 or the fourth optical element 22 may be parallel to any side of the light-receiving region 30A of the imaging element 30, the light-receiving region 30A having a rectangular shape. Alternatively, as illustrated in FIG. 9, the reflective surface of the mirror that is the third optical element 12 or the fourth optical element 22 may intersect with any side of the light-receiving region 30A. In a configuration in which the reflective surface of the mirror that is the third optical element 12 or the fourth optical element 22 intersects with any side of the light-receiving region 30A, the separation accuracy by the image separation model can be improved. In the configuration in which the reflective surface of the mirror that is the third optical element 12 or the fourth optical element 22 intersects with any side of the light-receiving region 30A, the third optical element 12 or the fourth optical element 22 may be disposed such that an overlap region between the light-receiving region 30A and a region sandwiched between two straight lines extending from both ends of the third optical element 12 or the fourth optical element 22 is maximized when viewed in a normal direction of the light-receiving region 30A.

The third optical element 12 may be located outside an exit pupil of the first optical element 11 when viewed in a direction of the optical axis 11A of the first optical system 10. The fourth optical element 22 may be located outside an exit pupil of the second optical element 21 when viewed in a direction of the optical axis 21A of the second optical system 20. More specifically, the third optical element 12 or the fourth optical element 22 may be disposed with respect to the first optical element 11 or the second optical element 21 such that the reflective surface thereof is located outside the exit pupil. Alternatively, the third optical element 12 or the fourth optical element 22 may be located inside the exit pupil when viewed in the direction of the optical axis 11A or 21A. In particular, in a configuration in which the light-receiving region 30A is smaller than a pupil diameter, the mirror may be located inside the exit pupil.

The third optical element 12 or the fourth optical element 22 may include multiple plane mirrors. Two plane mirrors belonging to at least one set among the multiple plane mirrors may be positioned such that their reflective surfaces face each other and are parallel to each other. Alternatively, the multiple plane mirrors may be two plane mirrors positioned such that their reflective surfaces are perpendicular to each other as illustrated in FIG. 10. In addition, the two plane mirrors whose reflective surfaces are perpendicular to each other may each be parallel to a corresponding one of two perpendicular sides of the light-receiving region 30A having a rectangular shape. Each of the plane mirrors may be in close contact with the outer edge of the light-receiving region 30A of the imaging element 30 in a normal direction of the plane mirror. Alternatively, a gap may be formed between each of the plane mirrors and the outer edge of the light-receiving region 30A in the normal direction of the plane mirror, such that the plane mirror and the outer edge are not in close contact with each other.

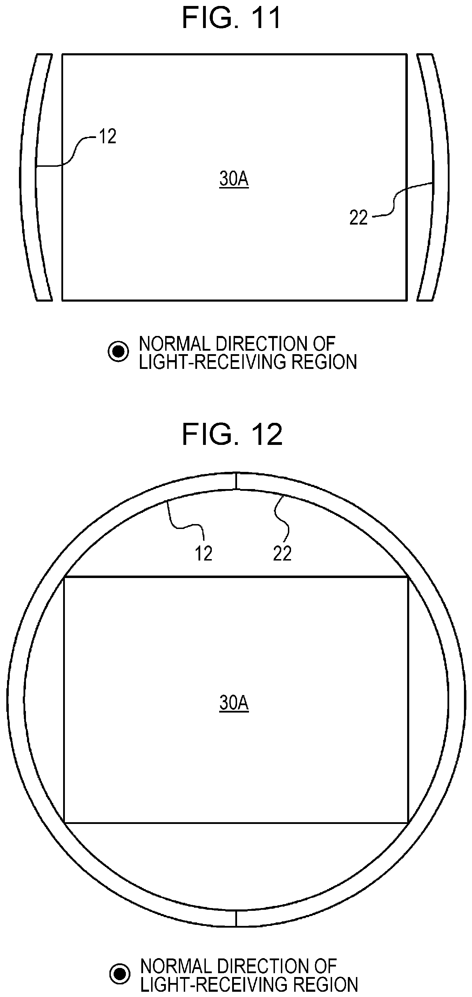

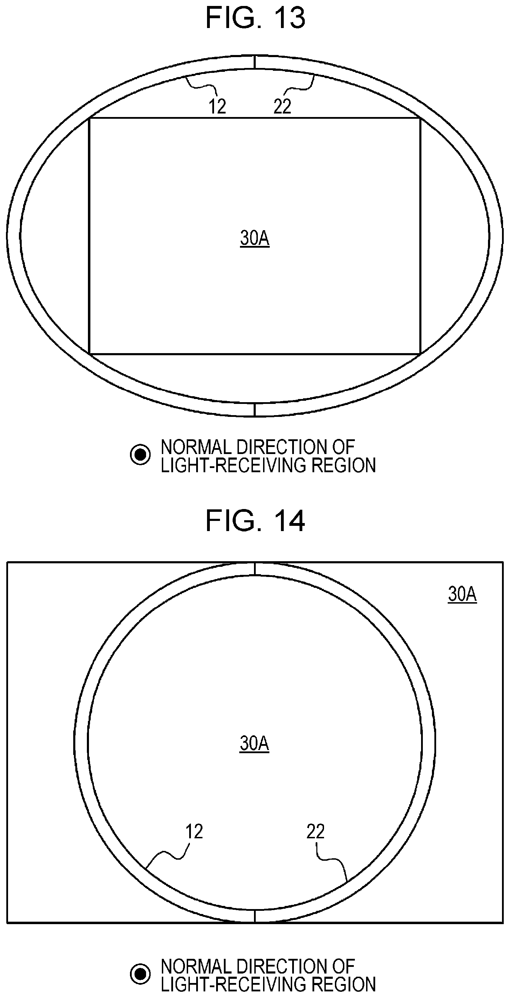

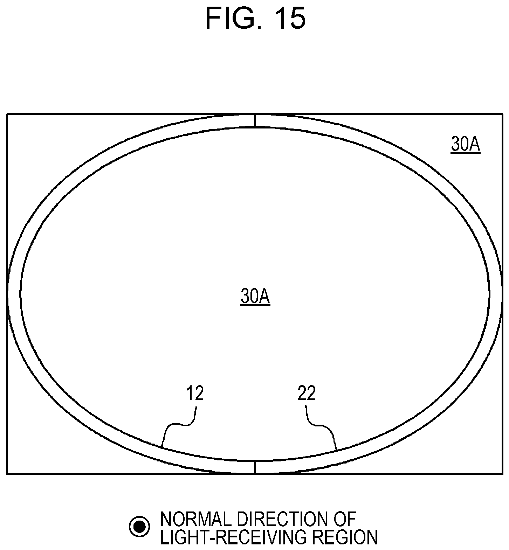

In the above description, the third optical element 12 or the fourth optical element 22 is a mirror having a surface parallel to the direction orthogonal to the optical axis 11A or 21A. The third optical element 12 or the fourth optical element 22 may be a mirror having a curved surface when viewed in the direction of the optical axis 11A or 21A. For example, as illustrated in FIG. 11, the third optical element 12 or the fourth optical element 22 may be a set of curved mirrors provided at a set of opposite sides of the rectangular light-receiving region 30A when viewed in the normal direction of the light-receiving region 30A. The curved mirrors may be parallel to the normal direction of the light-receiving region 30A. Alternatively, as illustrated in FIG. 12, the third optical element 12 or the fourth optical element 22 may be a mirror having a circular curved surface enclosing the rectangular light-receiving region 30A when viewed in the normal direction of the light-receiving region 30A. Alternatively, as illustrated in FIG. 13, the third optical element 12 or the fourth optical element 22 may be a mirror having an oval curved surface enclosing the rectangular light-receiving region 30A when viewed in the normal direction of the light-receiving region 30A. The mirror having an oval curved surface is preferable in a configuration in which the light-receiving region 30A has a rectangular shape excluding a square shape. Alternatively, as illustrated in FIG. 14, the third optical element 12 or the fourth optical element 22 may be a mirror having a circular curved surface enclosed within the rectangular light-receiving region 30A when viewed in the normal direction of the light-receiving region 30A. Alternatively, as illustrated in FIG. 15, the third optical element 12 or the fourth optical element 22 may be a mirror having an oval curved surface enclosed within the rectangular light-receiving region 30A when viewed in the normal direction of the light-receiving region 30A. In a configuration in which the third optical element 12 or the fourth optical element 22 is a mirror having a curved surface enclosed within the rectangular light-receiving region 30A, a gap between the light-receiving region 30A and the mirror can be eliminated when viewed in the normal direction of the light-receiving region 30A. In such a configuration, by eliminating the gap, continuity of optical information in the superimposed image 50 can be improved compared with a configuration in which the gap is formed. The third optical element 12 and the fourth optical element 22 illustrated in FIG. 12, FIG. 13, FIG. 14, or FIG. 14 may be separate components or integrally formed.

### <Configuration with Intermediate Mirror>

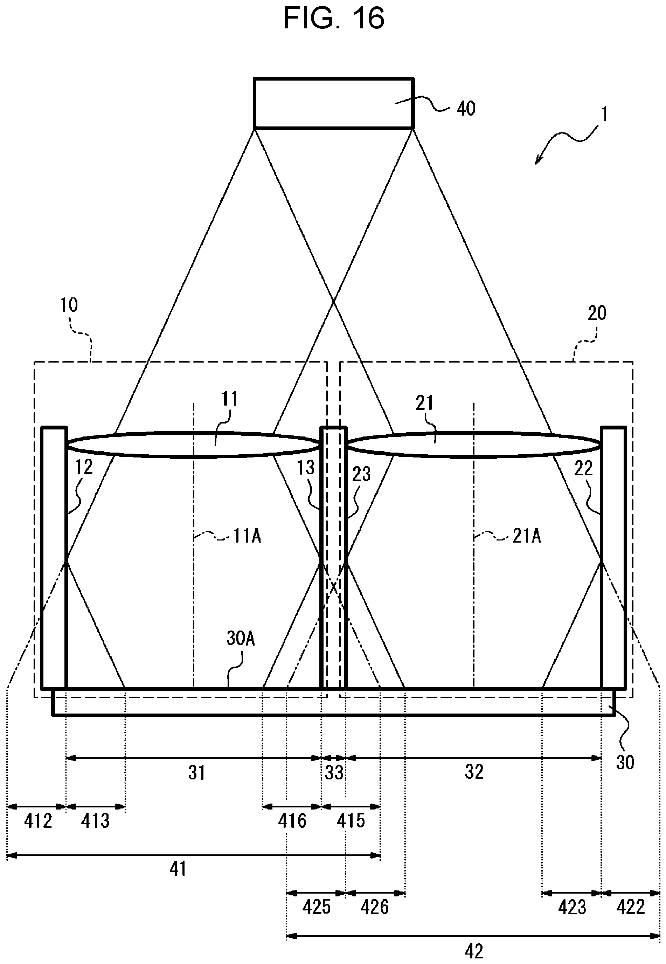

According to an embodiment, in the imaging device 1, the first optical system 10 may further include a fifth optical element 13 as illustrated in FIG. 16. The second optical system 20 may further include a sixth optical element 23. The fifth optical element 13 and the sixth optical element 23 are each a mirror having a reflective surface. The fifth optical element 13 and the sixth optical element 23 may be integrated as a single double-sided mirror. In other words, the imaging device 1 may include a double-sided mirror consisting of the fifth optical element 13 and the sixth optical element 23. The imaging element 30 cannot receive light in a region in which the fifth optical element 13 and the sixth optical element 23 are arranged. In this case, the light-receiving region 30A of the imaging element 30 includes the first light-receiving region 31, the second light-receiving region 32, and a non-light-receiving region 33. The non-light-receiving region 33 corresponds to the region in which the fifth optical element 13 and the sixth optical element 23 are arranged. In FIG. 16, the imaging device 1 does not necessarily include the third optical element 12. The imaging device 1 does not necessarily include the fourth optical element 22.

A portion of the first image 41, the portion being formed outside the first light-receiving region 31, is reflected by the reflective surface of the fifth optical element 13 toward the first light-receiving region 31. A portion of the first image 41, the portion being formed on the first light-receiving region 31, is referred to as a third external image 415. Light or a light beam corresponding to the third external image 415 is reflected by the reflective surface of the fifth optical element 13 and formed as an image inside the first light-receiving region 31. The image that is reflected by the reflective surface of the fifth optical element 13 and formed inside the first light-receiving region 31 is referred to as a third folded image 416. The fifth optical element 13 may cause at least part of light or a light beam traveling from the first optical element 11 toward the second light-receiving region 32 to travel toward the inside of the first light-receiving region 31.

A portion of the second image 42, the portion being formed outside the second light-receiving region 32, is reflected by the reflective surface of the sixth optical element 23 toward the second light-receiving region 32. A portion of the second image 42, the portion being formed on the second light-receiving region 32, is referred to as a fourth external image 425. Light or a light beam corresponding to the fourth external image 425 is reflected by the reflective surface of the sixth optical element 23 and formed as an image inside the second light-receiving region 32. The image that is reflected by the reflective surface of the sixth optical element 23 and formed inside the second light-receiving region 32 is referred to as a fourth folded image 426. The sixth optical element 23 may cause at least part of light or a light beam traveling from the second optical element 21 toward the first light-receiving region 31 to travel toward the inside of the second light-receiving region 32.

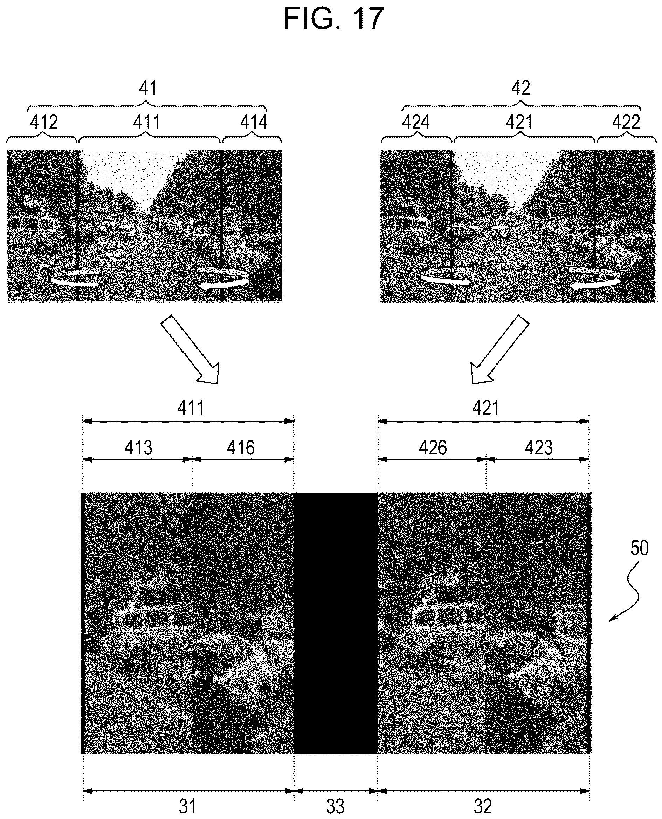

When the first optical system 10 includes the third optical element 12 and the fifth optical element 13, the superimposed image 50 illustrated in FIG. 17 includes an image obtained by capturing an image in which the first folded image 413 and the third folded image 416 are superimposed on the first non-superimposed image 411. When the second optical system 20 includes the fourth optical element 22 and the sixth optical element 23, the superimposed image 50 includes an image obtained by capturing an image in which the second folded image 423 and the fourth folded image 426 are superimposed on the second non-superimposed image 421. On the other hand, the superimposed image 50 does not include an image obtained by capturing an image in which the first superimposed image 414 and the second superimposed image 424 are superimposed. The superimposed image 50 can include, in a portion thereof corresponding to the non-light-receiving region 33, a blank image that is illustrated in black fill.

By positioning the fifth optical element 13 and the sixth optical element 23 between the first optical element 11 and the second optical element 21, the first image 41 and the second image 42 can be captured separately. In this manner, the first image 41 and the second image 42 can be completely separated.

### <Positional Relationship between Mirrors>

The reflective surfaces of the third optical element 12 and the fifth optical element 13 may be parallel to the optical axis 11A of the first optical element 11. The reflective surfaces of the third optical element 12 and the fifth optical element 13 may be located outside the exit pupil of the first optical element 11 when viewed in the direction of the optical axis 11A of the first optical element 11. The reflective surfaces of the fourth optical element 22 and the sixth optical element 23 may be parallel to the optical axis 21A of the second optical element 21. The reflective surfaces of the fourth optical element 22 and the sixth optical element 23 may be located outside the exit pupil of the second optical element 21 when viewed in the direction of the optical axis 21A of the second optical element 21.

The reflective surfaces of the third optical element 12 and the fourth optical element 22 may be in close contact with or as close as possible to the outer edge of the light-receiving region 30A of the imaging element 30. By positioning the reflective surfaces such that they are in close contact with or near the outer edge of the light-receiving region 30A of the imaging element 30, the first image 41 can be captured with no blind spot or with a reduced blind spot between the first folded image 413 and the first non-superimposed image 411. The second image 42 can be captured with no blind spot or with a reduced blind spot between the second folded image 423 and the second non-superimposed image 421.

The third optical element 12 and the fifth optical element 13 may be arranged such that their reflective surfaces face each other. The third optical element 12 and the fifth optical element 13 may be arranged such that their reflective surfaces are parallel to each other. The fourth optical element 22 and the sixth optical element 23 may be arranged such that their reflective surfaces face each other. The fourth optical element 22 and the sixth optical element 23 may be arranged such that their reflective surfaces are parallel to each other. The third optical element 12 and the fifth optical element 13 may be arranged such that their distances to the optical axis 11A of the first optical element 11 are equal to each other. The fourth optical element 22 and the sixth optical element 23 may be arranged such that their distances to the optical axis 21A of the second optical element 21 are equal to each other.

The first optical element 11 and the second optical element 21 may each be designed and positioned to satisfy CRA≤tan⁻¹(H/B). CRA denotes an angle, with respect to each of the optical axes 11A and 21A, of a light ray coming from a point within the subject 40 at an angle twice the direct angle of view. H denotes each of the distances from the third optical element 12 and the fifth optical element 13 to the optical axis 11A, and each of the distances from the fourth optical element 22 and the sixth optical element 23 to the optical axis 21A. B denotes a back focus of each of the first optical element 11 and the second optical element 21.

### <Multiple Imaging Elements 30>

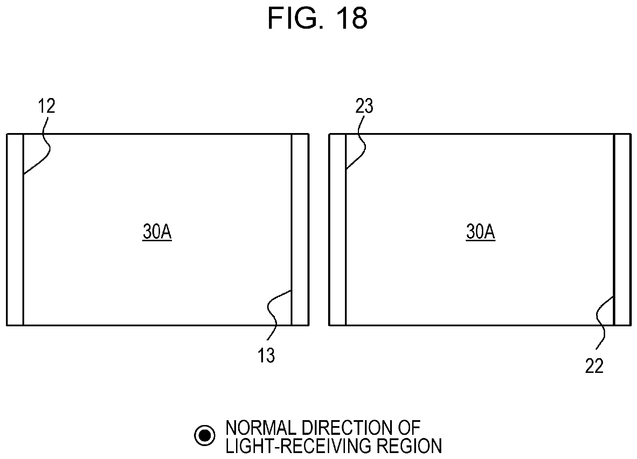

The imaging device 1 may include multiple imaging element 30. As illustrated in FIG. 18, the fifth optical element 13 or the sixth optical element 23 may be provided between two adjacent imaging elements 30. By providing the fifth optical element 13 or the sixth optical element 23 between the two adjacent imaging elements 30, light or a light beam of the subject 40 that would be formed as an image in a gap formed between the light-receiving regions 30A of the two adjacent imaging elements 30 in a configuration in which the fifth optical element 13 and the sixth optical element 23 are not provided can be captured by at least one of the imaging elements 30.

The drawings illustrating the embodiments of the present disclosure are schematic. The dimensional ratios and other proportions in the drawings are not necessarily identical to those of actual objects.

The embodiments according to the present disclosure have been described with reference to the drawings and an example. However, it is to be noted that variations and various alterations can be made on the basis of the present disclosure by those skilled in the art. Therefore, it is to be noted that such variations and alterations are also included within the scope of the present disclosure. For example, the functions and the like included in each component part can be rearranged as long as there is no logical contradiction, and multiple component parts and the like can be combined into a single component part or divided into multiple component parts. It is to be understood that these variations and alterations are also within the scope of the present disclosure.

All of the constituent elements described in the present disclosure and/or all of the disclosed methods or all of the steps of the process can be combined in any combination, except for combinations in which their features would be mutually exclusive. Each of the features described in the present disclosure can be replaced by an alternative feature that serves for the same, equivalent, or similar purpose, unless explicitly stated to the contrary. Therefore, unless explicitly stated to the contrary, each of the disclosed features is merely an example of a comprehensive series of the same or equivalent features.

The embodiments according to the present disclosure are not limited to any of the specific configurations of the above-described embodiments. The embodiments of the present disclosure can be extended to all the novel features described in the present disclosure, to any combination of these novel features, to all the novel methods or the steps of the process described in the present disclosure, or to any combination of these novel methods or the steps of the process.

In the present disclosure, the terms "first", "second", and so forth are identifiers used to distinguish the components from each other. In the present disclosure, the components distinguished by the terms "first", "second", and so forth are interchangeable with respect to their numerical identifiers. For example, the identifiers "first" and "second" can be exchanged between the first optical system 10 and the second optical system 20. Exchanging of the identifiers take place simultaneously. Even after exchanging the identifiers, the components are distinguishable from each other. The identifiers can be omitted. Components whose identifiers are omitted are distinguishable from each other by reference signs. In the present disclosure, the descriptions of the identifiers such as "first" and "second" alone are not to be used for interpretation of the order of the components or as grounds for the presence of lower-numbered identifiers.

Although the embodiments of the imaging method using the imaging device 1 have been described above, as the embodiments of the present disclosure, in addition to a method or a program for implementing a device, it is also possible to adopt embodiments as storage media (e.g., an optical disc, a magneto-optical disc, a CD-ROM, a CD-R, a CD-RW, a magnetic tape, a hard disk, a memory card, and so forth) in which the program is recorded.

The implementation of the program is not limited to application programs such as object code compiled by a compiler and program code executed by an interpreter and may also take, for example, the form of a program module incorporated into an operating system. In addition, the program may or may not be configured such that all processing is performed solely by a CPU on a control board. The program may be configured such that a portion or all of the processing is executed by another processing unit implemented on an expansion board or an expansion unit added to the board, as necessary.

In an embodiment, (1) an optical device includes
a first optical element that forms an image of light coming from a subject as a first image onto an area including a first imaging region of an imaging element and wider than the first imaging region, and
a second optical element that forms an image of light coming from the subject as a second image onto an area including a second imaging region of an imaging element and wider than the second imaging region, the second imaging region being adjacent to the first imaging region.
(2) **In** the optical device according to (1), a portion of the first image may be formed onto the second imaging region. A portion of the second image may be formed onto the first imaging region.
(3) The optical device according to (1) or (2) may further include
   a third optical element that causes at least part of light traveling from the first optical element toward outside the first and second imaging regions to travel toward inside the first imaging region, and
   a fourth optical element that causes at least part of light traveling from the second optical element toward outside the second and the first imaging regions to travel toward inside the second imaging region.
(4) The optical device according to (1) or (3) referring to (1) may further include
   a fifth optical element that causes light traveling from the first optical element toward the second imaging region to travel toward inside the first imaging region, and
   a sixth optical element that causes light traveling from the second optical element toward the first imaging region to travel toward inside the second imaging region.

In an embodiment, (5) an optical device includes
a first optical element that forms an image of light coming from a subject as a first image onto an area including a first imaging region of an imaging element and wider than the first imaging region,
a second optical element that forms an image of light coming from the subject as a second image onto an area including a second imaging region of an imaging element and wider than the second imaging region,
a fifth optical element that causes light traveling from the first optical element toward the second imaging region to travel toward inside the first imaging region, and
a sixth optical element that causes light traveling from the second optical element toward the first imaging region to travel toward inside the second imaging region.

In an embodiment, (6) an imaging device includes
an imaging element having an imaging region including a first imaging region and a second imaging region that is adjacent to the first imaging region,
a first optical system including a first optical element that forms an image of light coming from a subject as a first image onto an area wider than the first imaging region, and
a second optical system including a second optical element that forms an image of light coming from the subject as a second image onto an area wider than the second imaging region.

(7) In the imaging device according to (6), a portion of the first image may be formed onto the second imaging region. A portion of the second image may be formed onto the first imaging region.

(8) The imaging device according to (6) or (7) may further include
a third optical element that causes at least part of light traveling from the first optical element toward outside the imaging region to travel toward inside the first imaging region and
a fourth optical element that causes at least part of light traveling from the second optical element toward outside the imaging region to travel toward inside the second imaging region.

(9) The imaging device according to (6) or (8) referring to (7) may further include
a fifth optical element that causes light traveling from the first optical element toward the second imaging region to travel toward inside the first imaging region, and
a sixth optical element that causes light traveling from the second optical element toward the first imaging region to travel toward inside the second imaging region.

(10) The imaging device according to (9) may include a double-sided mirror consisting of the fifth optical element and the sixth optical element.

(11) In the imaging device according to (9) or (10), the fifth optical element and the sixth optical element may be located between an optical axis of the first optical element and an optical axis of the second optical element. The fifth optical element may have a reflective surface parallel to an optical axis of the first optical element. The sixth optical element may have a reflective surface parallel to an optical axis of the second optical element.

(12) In the optical device according to any one of (9) referring to (8) to (11), the third optical element and the fourth optical element may be mirrors. A reflective surface of the third optical element and a reflective surface of the fifth optical element may face each other. A reflective surface of the fourth optical element and a reflective surface of the sixth optical element may face each other.

(13) In the optical device according to any one of (6) to (12), the imaging element may output a superimposed image including at least one selected from a group consisting of an image in which a portion of the first image and a portion of the second image are superimposed on each other, an image in which a portion of the first image is superimposed on another portion of the first image, and an image in which a portion of the second image is superimposed on another portion of the second image.

(14) The imaging device according to (13) may further include a processor configured to output, by separating the superimposition from the superimposed image, the first image without superimposition and the second image without superimposition.

### REFERENCE SIGNS

1 imaging device
10 first optical system (11: first optical element, 11A: optical axis, 12: third optical element, 13: fifth optical element, 14: seventh optical element, 15: ninth optical element)
20 second optical system (21: second optical element, 21A: optical axis, 22: fourth optical element, 23: sixth optical element, 24: eighth optical element, 25: tenth optical element)
30 imaging element (30A: light-receiving region, 31: first light-receiving region,
32: second light-receiving region, 33: non-light-receiving region)
40 subject
41 first image (411: first non-superimposed image, 412: first external image, 413: first folded image, 414: first superimposed image, 415: third external image, 416: third folded image)
42 second image (421: second non-superimposed image, 422: second external image, 423: second folded image, 424: second superimposed image, 425: fourth external image, 426: fourth folded image)
44 superimposed image
50 superimposed image

## Claims

1. An optical device comprising:
a first optical element that forms an image of light coming from a subject as a first image onto an area including a first imaging region of an imaging element and wider than the first imaging region; and
a second optical element that forms an image of light coming from the subject as a second image onto an area including a second imaging region of an imaging element and wider than the second imaging region, the second imaging region being adjacent to the first imaging region.

2. The optical device according to claim 1,
wherein a portion of the first image is formed onto the second imaging region, and a portion of the second image is formed onto the first imaging region.

3. The optical device according to claim 1, further comprising:
a third optical element that causes at least part of light traveling from the first optical element toward outside the first and second imaging regions to travel toward inside the first imaging region; and
a fourth optical element that causes at least part of light traveling from the second optical element toward outside the second and the first imaging regions to travel toward inside the second imaging region.

4. The optical device according to claim 1 or 3, further comprising:
a fifth optical element that causes light traveling from the first optical element toward the second imaging region to travel toward inside the first imaging region; and
a sixth optical element that causes light traveling from the second optical element toward the first imaging region to travel toward inside the second imaging region.

5. An optical device comprising:
a first optical element that forms an image of light coming from a subject as a first image onto an area including a first imaging region of an imaging element and wider than the first imaging region;
a second optical element that forms an image of light coming from the subject as a second image onto an area including a second imaging region of an imaging element and wider than the second imaging region;
a fifth optical element that causes light traveling from the first optical element toward the second imaging region to travel toward inside the first imaging region; and
a sixth optical element that causes light traveling from the second optical element toward the first imaging region to travel toward inside the second imaging region.

6. An imaging device comprising:
an imaging element having an imaging region including a first imaging region and a second imaging region that is adjacent to the first imaging region;
a first optical system including a first optical element that forms an image of light coming from a subject as a first image onto an area wider than the first imaging region; and
a second optical system including a second optical element that forms an image of light coming from the subject as a second image onto an area wider than the second imaging region.

7. The imaging device according to claim 6,
wherein a portion of the first image is formed onto the second imaging region, and a portion of the second image is formed onto the first imaging region.

8. The imaging device according to claim 6, further comprising:
a third optical element that causes at least part of light traveling from the first optical element toward outside the imaging region to travel toward inside the first imaging region; and
a fourth optical element that causes at least part of light traveling from the second optical element toward outside the imaging region to travel toward inside the second imaging region.

9. The imaging device according to claim 8, further comprising:
a fifth optical element that causes light traveling from the first optical element toward the second imaging region to travel toward inside the first imaging region; and
a sixth optical element that causes light traveling from the second optical element toward the first imaging region to travel toward inside the second imaging region.

10. The imaging device according to claim 9, comprising:
a double-sided mirror consisting of the fifth optical element and the sixth optical element.

11. The imaging device according to claim 9,
wherein the fifth optical element and the sixth optical element are located between an optical axis of the first optical element and an optical axis of the second optical element,
wherein the fifth optical element has a reflective surface parallel to an optical axis of the first optical element, and
wherein the sixth optical element has a reflective surface parallel to an optical axis of the second optical element.

12. The imaging device according to claim 9,
wherein the third optical element and the fourth optical element are mirrors,
wherein a reflective surface of the third optical element and a reflective surface of the fifth optical element face each other, and
wherein a reflective surface of the fourth optical element and a reflective surface of the sixth optical element face each other.

13. The imaging device according to any one of claims 6 to 12,
wherein the imaging element outputs a superimposed image including at least one selected from a group consisting of an image in which a portion of the first image and a portion of the second image are superimposed on each other, an image in which a portion of the first image is superimposed on another portion of the first image, and an image in which a portion of the second image is superimposed on another portion of the second image. [Claim 14] The imaging device according to claim 13, further comprising:
a processor configured to output, by separating the superimposition from the superimposed image, the first image without superimposition and the second image without superimposition.
